(19) Europäisches Patentamt
European Patent Office
Office européen des brevets

(11) **EP 2 902 268 B1**

(12) **EUROPEAN PATENT SPECIFICATION**

(45) Date of publication and mention
of the grant of the patent:
**06.07.2016 Bulletin 2016/27**

(51) Int Cl.:
***B60R 16/023*** *(2006.01)*

(21) Application number: **15152856.9**

(22) Date of filing: **28.01.2015**

(54) **Method and system for determining a remaining travel distance available in a motor vehicle**

Verfahren und Vorrichtung zum Bestimmen der verbleibenden Reichweite eines Kraftfahrzeugs

Procédé et dispositif pour déterminer une autonomie restante disponible dans un véhicule automobile

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.01.2014 SE 1450097**

(43) Date of publication of application:
**05.08.2015 Bulletin 2015/32**

(73) Proprietor: **Scania CV AB**
**151 87 Södertälje (SE)**

(72) Inventor: **Vassberg, Sebastian**
**117 59 Stockholm (SE)**

(56) References cited:
**US-A- 4 400 779          US-A1- 2005 060 087**
**US-A1- 2011 196 600**

EP 2 902 268 B1

**Description**

**TECHNICAL FIELD**

The present invention relates to a method for determining a remaining travel distance available on a motor vehicle's remaining amount of propellant. The invention relates also to a computer programme comprising programme code for a computer for implementing a method according to the invention. The invention also relates to a system for determining a remaining travel distance available on a motor vehicle's remaining amount of propellant, and to a motor vehicle equipped with the system.

BACKGROUND

In today's vehicles it is possible to determine a measurement of how far a motor vehicle can travel on the fuel remaining in a fuel tank. In certain cars this information is presented on a display for a driver of the vehicle who is thus enabled to use this information for planning his/her journey better, e.g. by planning to stop for refuelling at a filling station.
Said measurement of how far a vehicle can travel on an available amount of fuel is called DTE (distance to empty) and may for example be expressed in kilometres or miles.
The parameters which may be taken into account in a known way of calculating a DTE measurement can comprise current amount of fuel, momentary vehicle speed and current fuel supply to the vehicle's engine. Thus a DTE measurement may be determined by multiplying a measurement of current amount of fuel by a measurement of momentary vehicle speed and dividing by a measurement of current fuel use by the vehicle's engine.
As at least one input signal representing said fuel use will exhibit great variations over time, quite slow filter functions are applied to arrive at a finally valid estimate of said DTE measurement. With today's technology an input signal representing the current amount of fuel in the fuel tank may exhibit a pattern of great variation over time, as when the fuel splashes in said tank.
In for example heavy vehicles such as trucks, a pattern of fuel consumption may vary greatly and quite often, as when loading and unloading freight or changing between travelling in an urban environment and on a major highway. It is therefore usual for said method for calculating DTE to be supplemented by various detection algorithms, resulting in considerably greater computational complexity.
The above mentioned disadvantages in combination result in limitations in the adaptation of current measurements of DTE, potentially with adverse consequences for a driver of the vehicle, e.g. sudden stop of fuel supply. Known methods for determining a DTE measurement might therefore in certain circumstances provide less relevant, or actually erroneous, estimates of how far the vehicle can continue to travel on an existing amount of fuel.
US 2011196600 describes a method for determining a DTE measurement, taking current fuel volume and fuel consumption into account.

SUMMARY OF THE INVENTION

There is thus a need to reliably achieve a system which can with great accuracy determine and provide a measurement with respect to DTE.
One object of the present invention is to propose a novel and advantageous method for determining a remaining travel distance available on a motor vehicle's remaining amount of propellant.
Another object of the invention is to propose a novel and advantageous system for determining a remaining travel distance available on a motor vehicle's remaining amount of propellant and a novel and advantageous computer programme for determining a remaining travel distance available on a motor vehicle's remaining amount of propellant.
A further object of the invention is to propose an alternative method for determining a remaining travel distance available on a motor vehicle's remaining amount of propellant, an alternative system for determining a remaining travel distance available on a motor vehicle's remaining amount of propellant and an alternative computer programme for determining a remaining travel distance available on a motor vehicle's remaining amount of propellant.
Some of said objects are achieved with a method for determining a remaining travel distance available on a motor vehicle's remaining amount of propellant according to claim 1. Other objects are achieved with a system for determining a remaining travel distance available on a motor vehicle's remaining amount of propellant according to claim 6. Advantageous embodiments are indicated in the dependent claims.
In accordance with one aspect of the present invention a method is provided for determining a remaining travel distance available on a motor vehicle's remaining amount of propellant, comprising the steps of:

- determining remaining amount of propellant;
- determining current vehicle speed;

- determining current propellant consumption;
- determining a routine measurement of remaining travel distance available on remaining amount of propellant on the basis of the parameter values thus determined which denote remaining amount of propellant, current vehicle speed and current propellant consumption;
- continuously determining travel distances during said determination as a basis for a corrected measurement of remaining travel distance available on remaining amount of propellant;
- determining said corrected measurement on the basis of a previously determined adjusted measurement of remaining travel distance available on remaining amount of propellant, with subtraction of a determined travel distance from the previously determined adjusted measurement;
- determining an adjusted measurement as the aggregate of a corrected measurement and a weighted magnitude representing a difference between said routine measurement and said corrected measurement.

Method steps may be repeated continuously in order to continuously determine an adjusted measurement with respect to DTE. This may entail applying a suitable sampling rate.

The result is a robust method for determining DTE which also takes into account a travelled distance. Said travel distances can be determined with very great precision, resulting in an accurate method for determining DTE.

Allowing in each iteration for a discrepancy between said routine measurement and said corrected measurement results in an accurate method for determining DTE.

The advantageous result is a computationally light method for continuously determining an accurate value of current DTE.

The method may comprise the step of

- weighting said magnitude by a constant which is multiplied by said difference.

Applying Kalman theory in a linear system where said constant can be used in the calculations results in a computationally easy method for continuously determining an accurate value of current DTE.

The method may comprise the step of

- causing said constant to be adapted to the magnitude of said difference in situations when said difference exceeds a predetermined value.

In this case the method according to the invention can advantageously comprise an adaptation to take into account for vehicle's loading or unloading of freight. This also entails automatic adaptation of the vehicle's fuel consumption pattern when it travels alternately in urban traffic and on major highways.

The value of said constant may be raised to increase the influence of said difference upon said adjusted measurement. Where applicable, the value of said constant may be raised to increase the influence of said difference upon said adjusted measurement. It may be raised in one or more steps to increase the influence of said difference upon said adjusted measurement. It may be raised steplessly to increase the influence of said difference upon said adjusted measurement.

The result is a flexible method according to one aspect of the present invention.

The value of said constant may be lowered to reduce the influence of said difference upon said adjusted measurement. Where applicable, the value of said constant may be lowered to reduce the influence of said difference upon said adjusted measurement. The value of said constant may be lowered in one or more steps to reduce the influence of said difference upon said adjusted measurement. The value of said constant may be lowered steplessly to reduce the influence of said difference upon said adjusted measurement.

The result is a flexible method according to one aspect of the present invention. A further result is an accurate method in that if any of said parameters of remaining amount of propellant, current vehicle speed and current propellant consumption present deviating or unreasonable values the influence of said difference may with advantage be reduced.

The method may comprise the step of

- presenting said determined adjusted measurement for an operator of the vehicle.

The result is a user-friendly method according to one aspect of the present invention.

The method may comprise the step of

- warning an operator of the vehicle when said determined adjusted measurement is below a predetermined warning threshold, which may be any suitable value, e.g. 20, 50 or 100 kilometres, making it possible for him/her to be warned if it is determined that the vehicle's propellant may be expected to come to an end after 20, 50 or 100 kilometres respectively.

One aspect of the present invention is a proposed system for determining a remaining travel distance available on a motor vehicle's remaining amount of propellant, comprising:

- means adapted to determining remaining amount of propellant;
- means adapted to determining current vehicle speed;
- means adapted to determining current propellant consumption;
- means adapted to determining a routine measurement of remaining travel distance available on remaining amount of propellant on the basis of the parameter values thus determined which denote remaining amount of fuel, current vehicle speed and current propellant consumption;
- means adapted to continuously determining travel distances during said determination as a basis for a corrected measurement of remaining travel distance available on remaining amount of propellant;
- means adapted to determining said corrected measurement on the basis of a previously determined adjusted measurement of remaining travel distance available on remaining amount of propellant, with subtraction of a determined travel distance from the previously determined adjusted measurement; and
- means adapted to determining an adjusted measurement as the aggregate of a corrected measurement and a weighted magnitude representing a difference between said routine measurement and said corrected measurement.

The system may comprise

- means adapted to weighting said magnitude by a constant which is multiplied by said difference.

The system may comprise

- means adapted to causing said constant to be adapted to the magnitude of said difference in situations when the difference exceeds a predetermined value.

The system may comprise

- means adapted to raising the value of said constant to increase the influence of said difference upon said adjusted measurement. The value of said constant may be raised to increase the influence of said difference upon said adjusted measurement.

The system may comprise

- means adapted, where applicable, to raising the value of said constant to increase the influence of said difference upon said adjusted measurement. Said means may be adapted to raising the value of said constant in one or more steps to increase the influence of said difference upon said adjusted measurement. Said means may be adapted to raising the value of said constant steplessly to increase the influence of said difference upon said adjusted measurement.

The system may comprise

- means adapted to lowering the value of said constant to reduce the influence of said difference upon said adjusted measurement.

The system may comprise

- means adapted, where applicable, to lowering the value of said constant to reduce the influence of said difference upon said adjusted measurement. Said means may be adapted to lowering the value of said constant in one or more steps to reduce the influence of said difference upon said adjusted measurement. Said means may be adapted to lowering the value of said constant steplessly to reduce the influence of said difference upon said adjusted measurement.

The system may comprise

- means adapted to presenting said determined adjusted measurement for an operator of the vehicle.

The system may comprise

- means adapted to warning an operator of the vehicle when said determined adjusted measurement is below a predetermined warning threshold value,

In accordance with one aspect of the present invention a motor vehicle is provided with a system according to any one of claims 6-10.

In accordance with one aspect of the present invention a motor vehicle is provided with a system for determining a remaining travel distance available on a remaining amount of propellant.

Said vehicle may be any from among a truck, bus or car.

In accordance with one aspect of the present invention a computer programme for determining a remaining travel distance available on a motor vehicle's remaining amount of propellant is provided, which programme comprises programme code for causing an electronic control unit or another computer connected to the electronic control unit to perform steps according to any one of claims 1-5.

In accordance with one aspect of the invention a computer programme for determining a remaining travel distance available on a motor vehicle's remaining amount of propellant is provided, which programme comprises programme code for causing an electronic control unit or another computer connected to the electronic control unit to perform steps according to any one of claims 1-5 when said programme code is run on said control unit or said computer.

In accordance with one aspect of the present invention a computer programme for determining a remaining travel distance available on a motor vehicle's remaining amount of propellant is provided, which programme comprises programme code stored on a computer-readable medium for causing an electronic control unit or another computer connected to the electronic control unit to perform steps according to any one of claims 1-5.

In accordance with one aspect of the present invention a computer programme for determining a remaining travel distance available on a motor vehicle's remaining amount of propellant In accordance with, which programme comprises programme code stored on a computer-readable medium for causing an electronic control unit or another computer connected to the electronic control unit to perform steps according to any one of claims 1-5 when said programme code is run on said control unit or said computer.

In accordance with one aspect of the present invention a computer programme product is provided which comprises programme code stored on a computer-readable medium for performing method steps according to any one of claims 1-5 when said programme is run on an electronic control unit or another computer connected to the electronic control unit.

In accordance with one aspect of the present invention a computer programme product is provided comprising a programme code stored in a non-volatile way on a computer-readable medium for performing method steps according to any one of claims 1-5 when said programme is run on an electronic control unit or another computer connected to the electronic control unit.

Further objects, advantages and novel features of the present invention will become apparent to one skilled in the art from the following details, and also by putting the invention into practice. While the invention is described below, it should be noted that it is not confined to the specific details described. One skilled in the art having access to the teachings herein will recognise further applications, modifications and incorporations in other fields, which are within the scope of the invention.

BRIEF DESCRIPTION OF THE DRAWINGS

For fuller understanding of the present invention and its further objects and advantages, the detailed description set out below should be read in conjunction with the accompanying drawings, in which the same reference notations are used for similar items in the various figures, and in which

Figure 1 schematically illustrates a vehicle,
Figure 2 schematically illustrates a subsystem of a vehicle, according to an embodiment of the invention,
Figure 3a is a schematic flowchart illustrating a method according to an embodiment of the invention,
Figure 3b is a more detailed schematic flowchart illustrating a method according to an embodiment of the invention, and
Figure 4 schematically illustrates a computer according to an embodiment of the invention.

DETAILED DESCRIPTION OF THE DRAWINGS

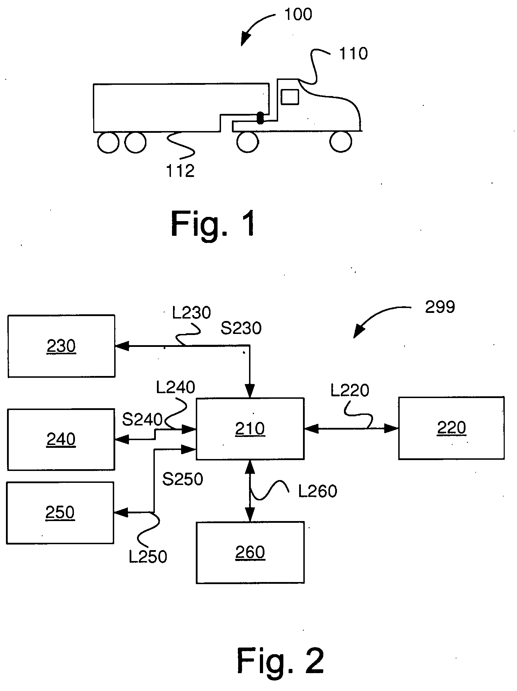

Figure 1 depicts a side view of a vehicle 100. The vehicle exemplified comprises a tractor unit 110 and a trailer 112. The vehicle may be a heavy vehicle, e.g. a truck or a bus. It may alternatively be a car.

The term "link" refers herein to a communication link which may be a physical line such as an opto-electronic communication line, or a non-physical line such as a wireless connection, e.g. a radio link or microwave link.

The method according to the invention and the system according to the invention are well suited to platforms powered by an engine, e.g. watercraft. The watercraft may be of any kind, e.g. motorboats, steamers and ferries.

The method according to the invention and the system according to the invention for determining a remaining travel distance available on a motor vehicle's remaining amount of propellant are also well suited in one aspect of the invention to, for example, tractors, forestry machines, wheel-mounted loaders and dumpers.

Figure 2 illustrates schematically a system 299 which may be part of the vehicle 100.

The system 299 comprises a first control unit 210 which may be an electronic control unit and which is arranged for communication with a second control unit 220 via a link L220.

The second control unit 220 may be detachably connected to the first control unit 210. This second control unit may be a control unit external to the vehicle 100. It may be arranged to perform method steps according to the invention. It may be used to cross-load programme code to the first control unit, particularly code for conducting the method according to the invention. It may alternatively be arranged for communication with the first control unit via an internal network of the vehicle. It may be arranged to perform substantially similar functions to those of the first control unit.

A first sensor configuration 230 is arranged for communication with the first control unit 210 via a link L230 and for continuously or intermittently detecting/determining/measuring a remaining amount Vol of propellant which is available for operating the vehicle 100. Said first sensor configuration may herein be called means adapted to determining remaining amounts Vol of propellant.

Said propellant may in one example be in a fuel tank on board the vehicle 100. It may be any suitable fuel, e.g. diesel fuel, petrol, ethanol, vegetable oil or other suitable organic or synthetic fuel. It may be stored in one or more tanks/containers on board the vehicle. It may be in liquid or gaseous form.

Said first sensor configuration 230 may be of a suitable kind, depending for example on the kind of fuel used for operating the vehicle and/or on a configuration of the container or containers intended to hold said fuel. The terms fuel and propellant are herein used synonymously.

Said first sensor configuration 230 is adapted to continuously or intermittently sending signals S230 to the first control unit 210 via said link L230. Said signals S230 will contain information about a measurement Vol of a current remaining amount of propellant on board the vehicle 100 which is mainly intended to be used to propel the vehicle by means of a combustion engine (not depicted) and an associated transmission. Said measurement Vol may be expressed in terms of volume or weight. Said first control unit 210 is arranged to conduct the method according to the invention irrespective of the unit of measure in which said measurement Vol of remaining propellant is expressed.

In one example said first sensor configuration 230 comprises an electromechanical float sensor situated in a fuel tank of the vehicle 100. In one example said first sensor configuration comprises a laser sensor or acoustic sensor situated in a roof of said fuel tank of the vehicle to determine a current amount Vol of remaining propellant by light reflection technology or echo technology respectively. In one example the first sensor configuration comprises a pressure sensor situated in a bottom of said fuel tank to determine a current remaining amount Vol of propellant.

A second sensor configuration 240 is arranged for communication with the first control unit 210 via a link L240. Said second sensor configuration is adapted to continuously or intermittently detecting/determining/measuring a current speed V of the vehicle 100. Said second sensor configuration may herein be called means adapted to determining current speeds V of the vehicle 100.

Said second sensor configuration 240 is adapted to continuously or intermittently sending signals S240 to the first control unit 210 via said link L240. Said signals 240 will contain information about a measurement of a current speed V of the vehicle 100.

In one example said second sensor configuration 240 comprises an angle sensor on a driveshaft which is part of a transmission of the vehicle 100. In one example said second sensor configuration comprises an angle sensor configuration associated with one or more wheels of the vehicle. In one example said second sensor configuration comprises positioning equipment, e.g. involving GPS equipment.

In one example version the first control unit 210 is arranged to continuously or intermittently determine a current vehicle speed V. This may be on the basis of parameters detected by the second sensor configuration 240 or in some other suitable way, e.g. by means of positioning equipment and an electronic card stored in a memory of the first control unit.

A third sensor configuration 250 is arranged for communication with the first control unit 210 via a link L250. The third sensor configuration is adapted to measuring/calculating/determining/modelling accumulated distances travelled by the vehicle. To this end, the third sensor is adapted to continuously determining travel distances S*Ts[n] as a basis for a corrected measurement Process DTE[n] of remaining travel distance available on remaining amount of propellant. Said travel distances S*Ts[n] represent a travel distance travelled during a sampling period.

The third sensor configuration 250 may comprise suitable sensors for determining said travel distances S*Ts[n], e.g. rotations of vehicle wheels may be determined as a basis for determining them.

In one exemplary embodiment, the first control unit 210 is arranged to continuously or intermittently determine said travel distances S*Ts[n]. This may be on the basis of vehicle speed continuously detected by the second sensor configuration 240 or in some other suitable way, e.g. by means of positioning equipment and an electronic map stored in a memory of the first control unit.

Said third sensor configuration 250 is adapted to continuously or intermittently sending signals S250 to the first control unit 210 via said link L250. Said signals S250 will contain information about a measurement of distance travelled relative to a reference point in time, e.g. referring to the latest sampling period.

In one version said first sensor configuration 230, second sensor configuration 240 and third sensor configuration 250 are adapted to measuring/detecting/determining values of respective parameters at a predetermined sampling rate. In this context a set of parameters may be indicated sequentially in a series 1, 2, 3,..., n, in which n is a positive whole number which represents a latest sampling value.

Presentation means 260 are provided for communication with the first control unit 210 via a link L260. Said presentation means may be termed presentation devices or devices adapted to presenting information. Said presentation means may comprise a viewing screen. Said screen may comprise a touchscreen. Said presentation means may be fitted in an instrument panel of the vehicle 100. Said presentation means may comprise loudspeaker equipment for expressing said information audibly by synthesised speech. In one version said presentation means may comprise means for tactile feedback to an operator of the vehicle.

The first control unit 210 is arranged to cause said presentation means to display/present/provide a relevant measurement of calculated/estimated remaining travel distance DTE before propellant in a container on board the vehicle comes to an end.

Said measurement may be presented in the form of alphanumeric signs and/or symbols.

In one example the text "DTE 52 km" may be displayed in a situation where in one aspect of the present invention it is determined that Final DTE = 52 km (see below).

A routine measurement Measured DTE of remaining travel distance available on remaining amount of propellant may be determined as below on the basis of the parameter values thus determined with respect to remaining amount Vol of propellant, current vehicle speed V and current propellant consumption Fuelrate, i.e.

$$Measured\ DTE[n] = \frac{Vol[n]}{Fuelrate[n]} * V[n]$$

in which the positive integer n indicates that all the parameter values refer to the same sample cycle (point in time).

In one embodiment, travel distances S*Ts are continuously determined as a basis for a corrected measurement Process DTE(n) of remaining travel distance available on remaining amount of propellant.

In one embodiment, a corrected measurement (Process DTE(n)) is calculated/determined on the basis of a previously determined adjusted measurement Final DTE(n-1) of remaining travel distance available on remaining amount of propellant, with subtraction of a determined travel distance from the previously determined adjusted measurement Final DTE(n-1). This may be expressed as

$$Process\ DTE[n] = Final\ DTE[n-1] - S * Ts$$

In one embodiment, an adjusted measurement Final DTE(n) is determined as the aggregate of a corrected measurement Process DTE(n) and a weighted magnitude representing a difference between said routine measurement Measured DTE and said corrected measurement Process DTE(n), i.e.

$$Final\ DTE[n] = Process\ DTE[n] + K * (Measured\ DTE[n] - Process\ DTE[n])$$

The result is a method for determining in an iterative way an accurate value of DTE, viz. Final DTE.

In one embodiment a value of said constant K may be adjusted by being increased. In situations where an absolute value of a difference between said routine DTE and said corrected measurement Process DTE is greater than a predetermined value C1, said constant K may be raised in one or more steps or steplessly in a suitable way.

One condition may be expressed as

$$|Measured\ DTE[n] - Process\ DTE[n]| \geq C1$$

In one embodiment a value of said constant K may be adjusted by being lowered. In situations where an absolute amount of a difference between said routine DTE and said corrected measurement Process DTE is less than a predetermined value C2, said constant K may be lowered in one or more steps or steplessly in a suitable way.

$$|Measured\ DTE[n] - Process\ DTE[n]| \leq C2$$

In one example version, C1 and C2 are equal.

Said adjustment whereby said constant K is caused to increase may be subject to the condition that said difference has to be greater than said predetermined value C1 for a certain predetermined period of time and hence a predetermined number of samples.

Said adjustment whereby said constant K is caused to decrease may be subject to the condition that said difference has to be below said predetermined value C2 for a certain predetermined period of time and hence a predetermined number of samples.

Said constant K may be any suitable value. It may be a predetermined value. It may be determined empirically beforehand.

In one example said constant K may be $10^{-4}$.

The first control unit 210 may be arranged to determine a remaining travel distance available on remaining amount of propellant DTE of the vehicle 100, in one aspect of the present invention.

The first control unit may be arranged to determine remaining amounts Vol of propellant. It may be arranged to determine current vehicle speeds V.

The first control unit may be arranged to determine current propellant consumption Fuelrate, which may herein also be called current fuel use by said engine and may be determined in suitable ways. In one version example the first control unit may continuously provide data about current use of fuel by an engine of the vehicle, in which case said dosage will be controlled by first control unit. Alternatively the first control unit may continuously receive signals containing information about said current fuel use Fuelrate from an engine control unit (not depicted) of the vehicle. In another version said measurement of momentary/current fuel dosage may be determined on rail pressure and open times of fuel valves of the vehicle's engine.

The first control unit may be arranged to determine a routine measurement Measured DTE of remaining travel distance available on remaining amount of propellant DTE on the basis of the parameter values thus determined with respect to remaining amount Vol of propellant, current vehicle speed V and current propellant consumption Fuelrate. In one version the first control unit is arranged to continuously determine said routine measurement Measured DTE by the equation

$$Measured\ DTE = \frac{Vol}{Fuelrate} * V$$

The first control unit may be arranged to continuously determine travel distances during said determination as a basis for a corrected measurement Process DTE(n) of remaining travel distance available on remaining amount of propellant.

The first control unit may be arranged to determine said corrected measurement Process DTE(n) on the basis of a previously determined adjusted measurement Final DTE(n-1) of remaining travel distance available on remaining amount of propellant, with subtraction of a determined travel distance from the previously determined adjusted measurement Final DTE(n-1).

The first control unit may be arranged to determine an adjusted measurement Final DTE(n) as the aggregate of a corrected measurement Process DTE(n) and a weighted magnitude representing a difference between said routine measurement Measured DTE and said corrected measurement Process DTE(n).

The first control unit may be arranged to weight said magnitude by a constant K which is multiplied by said difference.

The first control unit may be arranged, in situations where said difference is greater than a predetermined value C1, to cause said constant K to be adapted to the magnitude of the difference. It may in this case be arranged to raise the value of said constant K to increase the influence of said difference upon said adjusted measurement Final DTE(n).

The first control unit may be arranged, in situations where said difference is less than a predetermined value C2, to cause said constant K to be adapted to the magnitude of the difference. It may in this case be arranged to lower the value of said constant K to reduce the influence of said difference upon said adjusted measurement Final DTE(n).

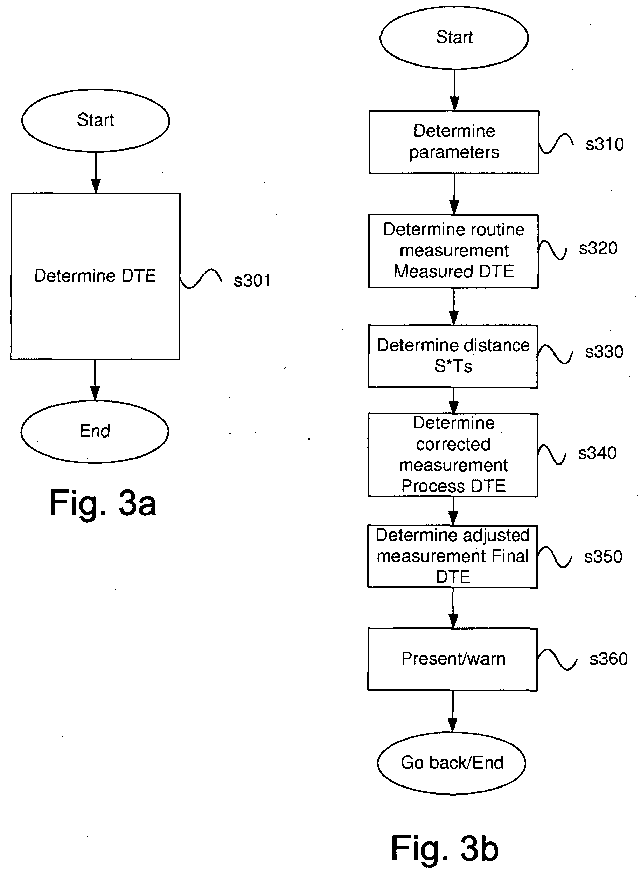

Figure 3a is a schematic flowchart illustrating a method for determining a remaining travel distance available on remaining amount of propellant DTE on board a motor vehicle 100. The method comprises a first step s301 comprising the steps of:

- determining remaining amount Vol of propellant;
- determining current vehicle speed V;
- determining current propellant consumption Fuelrate;
- determining a routine measurement Measured DTE of remaining travel distance available on remaining amount of propellant on the basis of the parameter values thus determined with respect to remaining amount Vol of propellant, current vehicle speed V and current propellant consumption Fuelrate;
- continuously determining travel distances during said determination as a basis for a corrected measurement Process DTE(n) of remaining travel distance available on remaining amount of propellant;
- determining said corrected measurement Process DTE(n) on the basis of a previously determined adjusted measurement Final DTE(n-1) of remaining travel distance available on remaining amount of propellant, with subtraction of a determined travel distance from the previously determined adjusted measurement Final DTE (n-1);
- determining an adjusted measurement Final DTE(n) as the aggregate of a corrected measurement Process DTE(n) and a weighted magnitude representing a difference between said routine measurement Measured DTE and said corrected measurement Process DTE(n).

The method ends after step s301.

Figure 3b is a schematic flowchart illustrating a method for determining a remaining travel distance available on remaining amount of propellant DTE on board a motor vehicle 100. It should be noted that this is an iterative method. In this example one calculation cycle is described.

The method comprises a first step s310 which may comprise the step of determining a number of parameters, viz. remaining amount Vol of propellant, momentary/current vehicle speed V and momentary/current propellant consumption Fuelrate. This may be performed with the first sensor configuration 230, the second sensor configuration 240 and/or the first control unit 210.

Method step s310 is followed by a step s320 which may comprise the step of determining a routine measurement Measured DTE of remaining travel distance available on remaining amount of propellant. This may in one example version be based on the parameter values thus determined with respect to remaining amount Vol of propellant, current vehicle speed V and current propellant consumption Fuelrate. This may be performed by the first control unit 210.

Method step s320 is followed by a step s330 which may comprise the step of determining a distance S*Ts which the vehicle has travelled since the last measuring point. In one version travel distances S*Ts are determined continuously during said determination as a basis for a corrected measurement Process DTE(n) of remaining travel distance available on remaining amount of propellant. This may be performed by the first control unit 210.

Method step s330 is followed by a step s340 which may comprise the step of determining a corrected measurement Process DTE. Step s340 may comprise the step of determining said corrected measurement Process DTE(n) on the basis of a previously determined adjusted measurement Final DTE(n-1) of remaining travel distance available on remaining amount of propellant, with subtraction of said determined travel distance S*Ts from the previously determined adjusted measurement Final DTE(n-1). This may be performed by the first control unit 210. The first time when that method step s330 is performed, an estimated value of a previously determined adjusted measurement Final DTE(n-1) of remaining travel distance available on remaining amount of propellant may be provided.

Method step s340 is followed by a step s350 which may comprise the step of determining an adjusted measurement Final DTE. Step s350 may comprise the step of determining said adjusted measurement Final DTE(n) as the aggregate of a corrected measurement Process DTE(n) and a weighted magnitude representing a difference between said routine measurement Measured DTE and said corrected measurement Process DTE(n). This may be performed by the first control unit 210.

Method step s350 is followed by a step s360 which may comprise the step of presenting said adjusted measurement Final DTE(n) for a driver/operator of the vehicle, which may take place via said presentation means 260.

In one version said driver/operator may be warned by said presentation means when said adjusted measurement is less than a predetermined value. It may thus be brought to said operator's notice that it is time to think about more propellant in order to avoid an operational stoppage.

After step s360 the method returns to step s310, or ends.

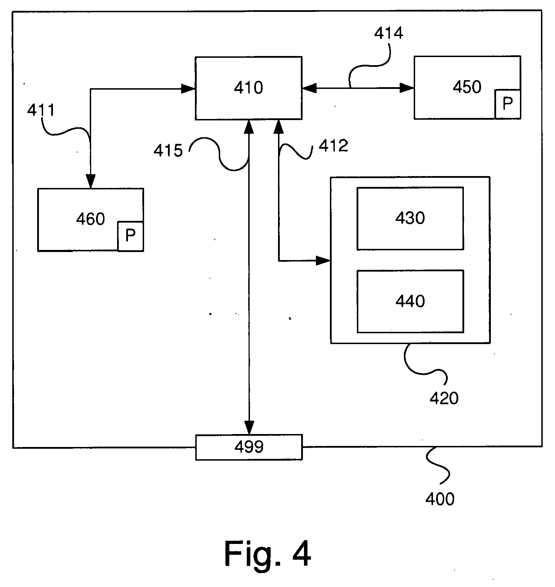

Figure 4 is a diagram of one version of a device 400. The control units 210 and 220 described with reference to Figure 2 may in one version comprise the device 400 which itself comprises a non-volatile memory 420, a data processing unit 410 and a read/write memory 450. The non-volatile memory 420 has a first memory element 430 in which a computer programme, e.g. an operating system, is stored for controlling the operation of the device 400. The device 400 further comprises a bus controller, a serial communication port, I/O means, an A/D converter, a time and date input and transfer unit, an event counter and an interruption controller (not depicted). The non-volatile memory 420 has also a second memory element 440.

A computer programme P is proposed for determining a remaining travel distance available on remaining amount of propellant DTE of a motor vehicle 100. In one version said DTE is determined as an adjusted measurement Final DTE which may be presented for an operator of the vehicle.

The programme P may comprise routines for determining remaining amounts Vol of propellant. It may comprise routines for determining current vehicle speeds V. It may comprise routines for determining current propellant consumption Fuelrate.

The programme P may comprise routines for determining a routine measurement Measured DTE of remaining travel distance available on remaining amount of propellant DTE on the basis of the parameter values thus determined with respect to remaining amount Vol of propellant, current vehicle speed V and current propellant consumption Fuelrate. It may comprise routines for continuously determining travel distances during said determination as a basis for a corrected measurement Process DTE(n) of remaining travel distance available on remaining amount of propellant.

The programme P may comprise routines for determining said corrected measurement Process DTE(n) on the basis of a previously determined adjusted measurement Final DTE(n-1) of remaining travel distance available on remaining amount of propellant, with subtraction of a determined travel distance S*Ts from the previously determined measurement Final DTE(n-1).

The programme P may comprise routines for determining an adjusted measurement Final DTE(n) as the aggregate of a corrected measurement Process DTE(n) and a weighted magnitude representing a difference between said routine measurement Measured DTE and said corrected measurement Processed DTE(n).

The programme P may comprise routines for weighting said magnitude by a constant K which is multiplied by said difference.

The programme P may comprise routines for causing said constant K to be adapted to the magnitude of said difference in situations where the latter is greater than a predetermined value C1.

The programme P may comprise routines for presenting said determined adjusted measurement for an operator of the vehicle. It may comprise routines for warning him/her when said determined adjusted measurement is below a predetermined value.

The programme P may be stored in an executable form or in compressed form in a memory 460 and/or a read/write memory 450.

Where the data processing unit 410 is described as performing a certain function, it means that it conducts a certain part of the programme stored in the memory 460 or a certain part of the programme stored in the read/write memory 450.

The data processing device 410 can communicate with a data port 499 via a data bus 415. The non-volatile memory 420 is intended for communication with the data processing unit 410 via a data bus 412. The separate memory 460 is intended to communicate with the data processing unit via a data bus 411. The read/write memory 450 is adapted to communicating with the data processing unit via a data bus 414. The data port 499 may have for example the links L220, L230, L240, L250 and L260 connected to it (see Figure 2).

When data are received on the data port 499, they are stored temporarily in the second memory element 440. When input data received have been temporarily stored, the data processing unit 410 will be prepared to conduct code execution as described above. In one version, signals received on the data port 499 contain information about a current acceleration control position on board the vehicle 100. In one version they contain information about a current/momentary remaining amount Vol of propellant, current/momentary vehicle speed V, distance S*Ts travelled during a sampling cycle and momentary/current fuel consumption Fuelrate of an engine of the vehicle. In one version they contain a set of parameter values for one sampling, herein referred to as n, comprising a current/momentary remaining amount Vol[n] of propellant, current/momentary vehicle speed V[n], distance S*Ts[n] travelled during one.sampling cycle and momentary/current fuel consumption Fuelrate[n] of an engine of the vehicle. A chronologically next set of parameter values for a sampling, herein called n+1, may in this case comprise a current/momentary remaining amount Vol[n+1] of propellant, current/momentary vehicle speed V[n+1], distance S*Ts[n+1] travelled during one sampling cycle and momentary/current fuel consumption Fuelrate[n+1] of an engine of the vehicle.

Parts of the methods herein described may be conducted by the device 400 by means of the data processing unit 410 which runs the programme stored in the memory 460 or the read/write memory 450. When the device 400 runs the programme, methods herein described are executed.

The foregoing description of the preferred embodiments of the present invention is provided for illustrative and descriptive purposes. It is not intended to be exhaustive, nor to restrict the invention to the embodiments described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

**Claims**

1. A method for determining a remaining travel distance available on remaining amount of propellant (DTE) on board a motor vehicle, comprising the steps of:

   - determining (s310) remaining amount (Vol) of propellant;
   - determining (s310) current vehicle speed (V);
   - determining (s310) current propellant consumption;
   - determining (s320) a routine measurement (Measured DTE) of remaining travel distance available on remaining amount of propellant on the basis of the parameter values thus determined with respect to remaining amount (Vol) of propellant, current vehicle speed (V) and current propellant consumption (Fuelrate); **characterised by** the steps of:
   - continuously (s330) determining travel distances during said determination as a basis for a corrected measurement (Process DTE(n)) of remaining travel distance available on remaining amount of propellant;
   - determining (s340) said corrected measurement (Process DTE(n)) on the basis of a previously determined adjusted measurement (Final DTE(n-1)) of remaining travel distance available on remaining amount of propellant, with subtraction of a determined travel distance (S*Ts) from the previously determined adjusted measurement (Final DTE (n-1));
   - determining (s350) an adjusted measurement (Final DTE(n)) as the aggregate of a corrected measurement (Process DTE(n)) and a weighted magnitude representing a difference between said routine measurement (Measured DTE) and said corrected measurement (Process DTE(n)).

2. A method according to claim 1, comprising the step of

   - weighting said magnitude by a constant (K) which is multiplied by said difference.

3. A method according to claim 2, comprising the step of

   - causing said constant (K) to be adapted to the magnitude of said difference in situations when the difference is greater than a predetermined value (C1).

4. A method according to claim 3, in which the value of said constant (K) is raised to increase the influence of said difference for said adjusted measurement (Final DTE (n)).

5. A method according to any one of the foregoing claims, comprising the step of

   - presenting (s360) said determined adjusted measurement (Final DTE(n)) for an operator of the vehicle (100).

6. A system for determining a remaining travel distance available on remaining amount of propellant (DTE) of a motor vehicle (100), comprising

   - means (230; 210; 220; 400) adapted to determining remaining amount (Vol) of propellant;
   - means (240; 210; 220; 400) adapted to determining current vehicle speed (V);
   - means (210; 220; 400) adapted to determining current propellant consumption;
   - means (210; 220; 230; 240; 400) adapted to determining a routine measurement (Measured DTE).of remaining travel distance available on remaining amount of propellant (DTE) on the basis of the parameter values thus determined with respect to remaining amount (Vol) of propellant, current vehicle speed (V) and current propellant consumption;

   **characterised by**

   - means (210; 220; 400) adapted to continuously determining travel distances (S*Ts) during said determination as a basis for a corrected measurement (Process DTE(n)) of remaining travel distance available on remaining amount of propellant,
   - means (210; 220; 400) adapted to determining said corrected measurement (Process DTE(n)) on the basis of a previously determined adjusted measurement (Final DTE(n-1)) of remaining travel distance available on remaining amount of propellant, which means (210; 220; 400) is arranged to subtract a determined travel distance from the previously determined adjusted measurement (Final DTE (n-1)), and

- means (210; 220; 400) adapted to determining an adjusted measurement (Final DTE(n)) as the aggregate of a corrected measurement (Process DTE(n)) and a weighted magnitude representing a difference between said routine measurement (Measured DTE) and said corrected measurement (Process DTE(n)).

7. A system according to claim 6, comprising

- means (210; 220; 400) adapted to weighting said magnitude by a constant (K) which is multiplied by said difference.

8. A system according to claim 7, comprising

- means (210; 220; 400) adapted to causing said constant (K) to be adjusted to the magnitude of said difference in situations when the difference is greater than a predetermined value (C1).

9. A system according to claim 8, comprising

- means (210; 220; 400) adapted to raising the value of said constant (K) to increase the influence of said difference for said adjusted measurement (Final DTE (n)).

10. A system according to any one of claims 6-9, comprising

- means (260; 210; 220; 400) adapted to presenting said determined adjusted measurement (Final DTE(n)) for an operator of the vehicle.

11. A motor vehicle (100; 110) provided with a system according to any one of claims 6-10.

12. A motor vehicle (100; 110) according to claim 11, which vehicle is any from among a truck, bus or car.

13. A computer programme (P) for determining a remaining travel distance available on remaining amount of propellant (DTE) of a motor vehicle (100), which programme (P) comprises programme code for causing an electronic control unit (210; 400) or another computer (220; 500) connected to the electronic control unit (210; 400) to perform steps according to any one of claims 1-5.

14. A computer programme product comprising a programme code stored on a computer-readable medium for performing method steps according to any one of claims 1-5 when said code is run on an electronic control unit (210; 400) or another computer (220; 500) connected to the electronic control unit (210; 400).

**Patentansprüche**

1. Verfahren zum Bestimmen einer verbleibenden Reiseentfernung mit vorhandener verbleibender Kraftstoffstoffmenge (DTE) an Bord eines Kraftfahrzeugs, umfassend die Schritte:

- Bestimmen (s310) einer verbleibenden Kraftstoffmenge (Vol);
- Bestimmen (s310) einer momentanen Fahrzeuggeschwindigkeit (V);
- Bestimmen (s310) eines momentanen Kraftstoffverbrauchs;
- Bestimmen (s320) einer Routinemessung (Messured DTE) der verbleibenden Reiseentfernung mit der vorhandenen verbleibenden Kraftstoffstoffmenge auf Grundlage der Parameterwerte, die in Bezug auf die verbleibende Kraftstoffmenge (Vol), die momentane Fahrzeuggeschwindigkeit (V) und den momentanen Kraftstoffverbrauch (Fuelrate) bestimmt werden;

**gekennzeichnet durch** die Schritte:

- kontinuierliches Bestimmen (s330) von Reiseentfernungen während der Bestimmung als eine Grundlage für eine korrigierte Messung (Prozess DTE(n)) der verbleibenden Reiseentfernung mit der vorhandenen verbleibenden Kraftstoffstoffmenge;
- Bestimmen (s340) der korrigierten Messung (Prozess DTE(n)) auf der Grundlage einer zuvor bestimmten angepassten Messung (Final DTE (n-1)) der verbleibenden Reiseentfernung mit der vorhandenen verbleibenden Kraftstoffstoffmenge mit Subtrahieren einer bestimmten Reiseentfernung (S*Ts) von der zuvor bestimmten angepassten Messung (Final DTE (n-1));
- Bestimmen (s350) einer angepassten Messung (Final DTE(n)) als die Summe einer korrigierten Messung (Prozess DTE(n)) und einer gewichteten Größe, die eine Differenz der Routinemessung (Messured DTE) und der korrigierten Messung (Prozess DTE(n)) darstellt.

2. Verfahren nach Anspruch 1, umfassend den Schritt

- Gewichten der Größe durch eine Konstante (K), die mit der Differenz multipliziert wird.

3. Verfahren nach Anspruch 2, umfassend den Schritt

- Bewirken, dass für Fälle, in denen die Differenz größer als die zuvor bestimmte Größe (C1) ist, die Konstante (K) an die Größe der Differenz angepasst wird.

4. Verfahren nach Anspruch 3, wobei der Wert der Konstante (K) bestimmt wird, um den Einfluss der Differenz zu der angepassten Messung (Final DTE(n)) zu erhöhen.

5. Verfahren nach einem der vorherigen Ansprüche, umfassend den Schritt

- Darstellen (s360) der bestimmten angepassten Messung (Final DTE(n)) für den Benutzer des Fahrzeugs (100).

6. System zum Bestimmen einer verbleibenden Reiseentfernung mit einer vorhandenen verbleibender Kraftstoffstoffmenge eines Kraftfahrzeugs (DTE), umfassend

- Mittel (230; 210; 220; 400), die dazu geeignet sind, die verbleibende Kraftstoffstoffmenge zu bestimmen;
- Mittel (240; 210; 220; 400), die dazu geeignet sind, die momentane Fahrzeuggeschwindigkeit zu bestimmen;
- Mittel (210; 220; 400), die dazu geeignet sind, den momentanen Kraftstoffverbrauch zu bestimmen;
- Mittel (210; 220; 230; 240; 400), die dazu geeignet sind, eine Routinemessung (Messured DTE) der verbleibenden Reiseentfernung mit der vorhandenen verbleibenden Kraftstoffstoffmenge (DTE) auf Grundlage der Parameterwerte zu bestimmen, die in Bezug auf die verbleibende Kraftstoffmenge (Vol), die momentane Fahrzeuggeschwindigkeit (V) und den momentanen Kraftstoffverbrauch bestimmt werden;

**gekennzeichnet durch**

- Mittel (210; 220; 400), die dazu geeignet sind, kontinuierlich Reiseentfernungen während der Bestimmung zu bestimmen als eine Grundlage für eine korrigierte Messung (Prozess DTE(n)) der verbleibenden Reiseentfernung mit der vorhandenen verbleibenden Kraftstoffstoffmenge,
- Mittel (210; 220; 400), die dazu geeignet sind, um die korrigierte Messung (Prozess DTE(n)) auf der Grundlage einer zuvor bestimmten angepassten Messung (Final DTE (n-1)) der verbleibenden Reiseentfernung mit der vorhandenen verbleibenden Kraftstoffstoffmenge zu bestimmen, wobei die Mittel (210; 220; 400) dazu ausgebildet sind, um eine bestimmte Reiseentfernung von der zuvor bestimmten angepassten Messung (Final DTE (n-1)) zu subtrahieren, und
- Mittel (210; 220; 400), die dazu geeignet sind, um eine angepasste Messung (Final DTE(n)) aus der Summe von einer korrigierten Messung (Prozess DTE(n)) und einer gewichteten Größe, der die Differenz der Routinemessung (Messured DTE) und der korrigierten Messung (Prozess DTE(n) darstellt, zu bestimmen.

7. System nach Anspruch 6, umfassend

- Mittel (210; 220; 400), die dazu geeignet sind, um die Größe durch eine Konstante (K), die mit der Differenz multipliziert wird, zu gewichten.

8. System nach Anspruch 7, umfassend

- Mittel (210; 220; 400), die dazu geeignet sind, um zu bewirken, dass für Fälle, in denen die Differenz größer als der zuvor bestimmte Wert (C1) ist, die Konstante (K) an die gewichtete Größe der Differenz angepasst wird.

9. System nach Anspruch 8, umfassend

- Mittel (210; 220; 400), die dazu geeignet sind, um den Wert der Konstante (K) zu steigern, um den Einfluss der Differenz an die angepassten Messung (Final DTE(n)) zu erhöhen.

10. System nach einem der Ansprüche 6-9, umfassend

- Mittel (260; 210; 220; 400), die dazu geeignet sind, um die bestimmte angepasste Messung (Final DTE(n)) für den Benutzer des Fahrzeugs (100) darzustellen.

11. Kraftfahrzeug (100; 110) ausgestattet mit einem System nach einem der Ansprüche 6-10.

12. Kraftfahrzeug (100; 110) nach Anspruch 11, wobei das Fahrzeug jede Art von Lastkraftwagen, Bus oder Personenkraftwagen ist.

13. Computerprogramm zum Bestimmen einer verbleibenden Reiseentfernung mit der vorhandenen verbleibenden Kraftstoffstoffmenge (DTE) eines Kraftfahrzeugs, wobei das Programm (P) einen Programmcode umfasst, der eine elektronische Steuereinheit (210; 400) oder einen weiteren Computer (220; 500), der an die elektronische Steuereinheit (210; 400) angeschlossen ist, dazu veranlasst die Schritte nach einem der Ansprüche 1-5 auszuführen.

14. Computerprogrammprodukt umfassend einen Programmcode, der auf einem für einen Computer lesbaren Medium gespeichert ist, um einen der Schritte nach einem der Ansprüche 1-5 auszuführen, wenn der Code auf einer elektronischen Steuereinheit (210; 400) oder einem weiteren Computer (220; 500) ausgeführt wird, der an eine elektronische Steuereinheit (210; 400) angeschlossen ist.

**Revendications**

1. Procédé pour déterminer une distance de déplacement restante disponible avec une quantité restante de carburant (DTE) à bord d'un véhicule à moteur, comprenant les étapes consistant à :

   - déterminer (s310) une quantité restante (Vol) de carburant ;
   - déterminer (s310) une vitesse de véhicule actuelle (V) ;
   - déterminer (s310) une consommation de carburant actuelle ;
   - déterminer (s320) une mesure de routine (DTE mesurée) de distance de déplacement restante disponible avec une quantité restante de carburant en fonction des valeurs de paramètre ainsi déterminées par rapport à la quantité restante (Vol) de carburant, à la vitesse de véhicule actuelle (V) et à la consommation de carburant actuelle (débit de carburant) ;

   **caractérisé par** les étapes consistant à :

   - déterminer de façon continue (s330) des distances de déplacement durant ladite détermination comme base pour une mesure corrigée (Process DTE(n)) de distance de déplacement restante disponible avec une quantité restante de carburant ;
   - déterminer (s340) ladite mesure corrigée (Process DTE(n)) en fonction d'une mesure ajustée déterminée précédemment (Final DTE(n-1)) de distance de déplacement restante disponible avec une quantité restante de carburant, avec la soustraction d'une distance de déplacement déterminée (S*Ts) à partir de la mesure ajustée déterminée précédemment (Final DTE(n-1)) ;
   - déterminer (s350) une mesure ajustée (Final DTE(n)) comme étant l'agrégat d'une mesure corrigée (Process DTE(n)) et d'une grandeur pondérée représentant une différence entre ladite mesure de routine (DTE mesurée) et ladite mesure corrigée (Process DTE(n)).

2. Procédé selon la revendication 1, comprenant l'étape consistant à:

   - pondérer ladite grandeur par une constante (K) qui est multipliée par ladite différence.

3. Procédé selon la revendication 2, comprenant l'étape consistant à:

   - provoquer l'adaptation de ladite constante (K) à la grandeur de ladite différence dans des situations dans lesquelles la différence est supérieure à une valeur prédéterminée (C1).

4.  Procédé selon la revendication 3, dans lequel la valeur de ladite constante (K) est élevée de façon à accroître l'influence de ladite différence sur ladite mesure ajustée (Final DTE(n)).

5.  Procédé selon l'une quelconque des revendications précédentes, comprenant l'étape consistant à :

    - présenter (s360) ladite mesure ajustée déterminée (Final DTE(n)) à un opérateur du véhicule (100).

6.  Système pour déterminer une distance de déplacement restante disponible avec une quantité restante de carburant (DTE) d'un véhicule à moteur (100), comprenant :

    - des moyens (230 ; 210 ; 220 ; 400) adaptés de façon à déterminer une quantité restante (Vol) de carburant ;
    - des moyens (240 ; 210 ; 220 ; 400) adaptés de façon à déterminer une vitesse de véhicule actuelle (V);
    - des moyens (210 ; 220 ; 400) adaptés de façon à déterminer une consommation de carburant actuelle ;
    - des moyens (210 ; 220 ; 230 ; 240 ; 400) adaptés de façon à déterminer une mesure de routine (DTE mesurée) de distance de déplacement restante disponible avec une quantité restante de carburant (DTE) en fonction des valeurs de paramètre ainsi déterminées par rapport à la quantité restante (Vol) de carburant, à la vitesse de véhicule actuelle (V) et à la consommation de carburant actuelle ;

    **caractérisé par** :

    - des moyens (210 ; 220 ; 400) adaptés de façon à déterminer de façon continue des distances de déplacement (S*Ts) durant ladite détermination comme base pour une mesure corrigée (Process DTE(n)) de distance de déplacement restante disponible avec une quantité restante de carburant,
    - des moyens (210 ; 220 ; 400) adaptés de façon à déterminer ladite mesure corrigée (Process DTE(n)) en fonction d'une mesure ajustée déterminée précédemment (Final DTE(n-1)) de distance de déplacement restante disponible avec une quantité restante de carburant, ces moyens (210 ; 220 ; 400) étant agencés de façon à soustraire une distance de déplacement déterminée de la mesure ajustée déterminée précédemment (Final DTE(n-1)), et
    - des moyens (210 ; 220 ; 400) adaptés de façon à déterminer une mesure ajustée (Final DTE(n)) comme étant l'agrégat d'une mesure corrigée (Process DTE(n)) et d'une grandeur pondérée représentant une différence entre ladite mesure de routine (DTE mesurée) et ladite mesure corrigée (Process DTE(n)).

7.  Système selon la revendication 6, comprenant :

    - des moyens (210 ; 220 ; 400) adaptés de façon à pondérer ladite grandeur par une constante (K) qui est multipliée par ladite différence.

8.  Système selon la revendication 7, comprenant :

    - des moyens (210 ; 220 ; 400) adaptés de façon à provoquer l'ajustement de ladite constante (K) à la grandeur de ladite différence dans des situations dans lesquelles la différence est supérieure à une valeur prédéterminée (C1).

9.  Système selon la revendication 8, comprenant :

    - des moyens (210 ; 220 ; 400) adaptés de façon à élever la valeur de ladite constante (K) de façon à accroître l'influence de ladite différence sur ladite mesure ajustée (Final DTE(n)).

10. Système selon l'une quelconque des revendications 6 à 9, comprenant :

    - des moyens (260 ; 210 ; 220 ; 400) adaptés de façon à présenter ladite mesure ajustée déterminée (Final DTE(n)) à un opérateur du véhicule.

11. Véhicule à moteur (100 ; 110) muni d'un système selon l'une quelconque des revendications 6 à 10.

12. Véhicule à moteur (100 ; 110) selon la revendication 11, ce véhicule étant choisi parmi un camion, un autobus ou une voiture.

**13.** Programme informatique (P) pour déterminer une distance de déplacement restante disponible avec une quantité restante de carburant (DTE) d'un véhicule à moteur (100), ce programme (P) comprenant un code de programme pour provoquer l'exécution, par une unité de commande électronique (210 ; 400) ou un autre ordinateur (220 ; 500) connecté à l'unité de commande électronique (210 ; 400), d'étapes selon l'une quelconque des revendications 1 à 5.

**14.** Produit de programme informatique comprenant un code de programme mémorisé sur un support lisible par un ordinateur pour exécuter des étapes de procédé selon l'une quelconque des revendications 1 à 5 lorsque ledit code est exécuté sur une unité de commande électronique (210 ; 400) ou un autre ordinateur (220 ; 500) connecté à l'unité de commande électronique (210 ; 400).

Fig. 1

Fig. 2

Start

Determine DTE        s301

End

## Fig. 3a

Start

Determine parameters        s310

Determine routine measurement Measured DTE        s320

Determine distance S*Ts        s330

Determine corrected measurement Process DTE        s340

Determine adjusted measurement Final DTE        s350

Present/warn        s360

Go back/End

## Fig. 3b

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011196600 A